# EUROPEAN PATENT SPECIFICATION

(11) **EP 3 846 658 B1**
(45) Date of publication and mention of the grant of the patent: **05.10.2022**
(21) Application number: 18816265.5
(22) Date of filing: 25.10.2018
(51) Int. Cl.: A45C 5/14, A45C 9/00, A45C 13/04

(54) **MOTORIZED CARRY-ON PROVIDED WITH A RETRACTABLE PLATFORM COMPRISING A PAIR OF DRIVING WHEELS**
MOTORISIERTES HANDGEPÄCK MIT EINER EINZIEHBAREN PLATTFORM MIT EINEM PAAR ANTRIEBSRÄDER
PETITE VALISE MOTORISÉE POURVUE D'UNE PLATEFORME RÉTRACTABLE COMPRENANT UNE PAIRE DE ROUES MOTRICES

(30) Priority: 21.09.2018 IT 201800008815
(43) Date of publication of application: 14.07.2021
(73) Proprietor: BE Initia Srl, 20129 Milano (MI) (IT)
(72) Inventor: QUARTA, Gaetano, 20099 Sesto San Giovanni (MI) (IT)
(74) Representative: Mozzanica, Luca
(86) International application number: PCT/IT2018/000137
(87) International publication number: WO 2020/058997

(56) References cited:
- EP-A1- 3 225 129
- CN-A- 108 433 293
- CN-U- 206 150 680

## Description

### Field of application of the invention

The present invention applies to the field of containers that can be used for transporting personal objects. Namely, the present invention relates to containers (such as for example, suitcases and backpacks) provided with an extendable handle and with one or more wheels for easily pulling the same by hand. For convenience of disclosure, the term "carry-on" in the description below refers to any container of the aforesaid type.

The present invention in particular relates to a "motorized" carry-on, i.e. a carry-on suitable for acting as motor transport means.

### Overview of the prior art

Current motorized carry-ons generally comprise a suitcase including an extendable handle, a first pair of idler wheels and a second pair of driving wheels connected to a motor to put the same into rotation. By schematizing the suitcase as a rectangular-based parallelepiped, the four wheels are installed at the vertexes, respectively, of a first side wall. Namely, the two idler wheels are close to the lower base while the two driving wheels are close to the upper base. The handle is extendable from the upper base, orthogonal to the latter, at the furthest corner from the driving wheels. A handlebar mechanically connected to the idler wheels is accommodated in a second side wall opposite to said first wall, almost at the common corner with the lower base. The handlebar is extendable orthogonal to said second wall and in addition to acting as steering element (by means of the idler wheels), it includes controls for actuating the motor and subsequently putting the driving wheels into rotation. When the carry-on is to be pulled, the handle is extended and the suitcase is slightly tilted about the axis of the idler wheels so as to raise the lower base off the ground. When the carry-on is instead intended to be used as a motor transport means, the handle is to be retracted, the handlebar is to be extended and the suitcase is to be rotated by 90° about the axle of the idler wheels so as to rest the driving wheels on the ground. A user of the carry-on may therefore straddle the suitcase and drive the latter as if it were a four-wheel motorcycle (in which the two idler wheels serve as guide wheels). Such a carry-on is described by way of example in Patent Application US 2016 255928 A1.

When the above-described carry-on is used as a transport means, the weight of the user weighs on the suitcase. The latter therefore is to be sufficiently sturdy to support the weight of an adult man. Additionally, should the user have a physical problem in one or both knees, he/she might not be capable of straddling the suitcase and accordingly, in this case, he/she could not use the carry-on as motor transport means. CN 206150680 U discloses another example of a motorized carry-on.

### Objects of the invention

It is the object of the present invention to overcome the aforesaid drawbacks by indicating a motorized carry-on which is alternative to the one described above, which can be used by a user as a motorized means of transport while remaining standing.

### Summary and advantages of the invention

The object of the present invention is a carry-on comprising:
- a container including a base and at least one side wall adjacent to said base;
- at least one handle connected to said container and extendable from the latter from a portion thereof opposite to said base;
- a plurality of wheels at which said container can rest on the ground, each wheel of said plurality being rotatable about a transverse axis thereof so as to roll on the ground when said container is resting on the ground at said wheels;
- first actuator means connected to a first (driving) wheel of said plurality, to put the same into rotation about the transverse axis thereof;
- first control means connected to said first actuator means to control an actuation thereof,
in which, according to the invention, said carry-on further comprises:
- second actuator means connected to a second (driving) wheel of said plurality, to put the same into rotation about the transverse axis thereof,
   said first control means also being connected to said second actuator means to control an actuation thereof;
- a first platform movable between a first position at which it is at least partly opposed to said base, and a second position at which it at least partly protrudes from said side wall,
   said first and second wheel being connected to said first platform,
   a third and a fourth wheel of said plurality (preferably not connected to any actuator and therefore idler) being connected to said first platform, each of said third and fourth wheel being also rotatable about a further axis arranged orthogonal to the transverse axis thereof,
   said first, second, third and fourth wheel being positioned at the vertexes of a quadrilateral, said third and fourth wheel being at the ends of the same side of said quadrilateral,
   when said container is resting on the ground at said wheels and said first platform is in said first position, said container is tiltable, by means of said handle, about said third and fourth wheel so as to raise said first and second wheel off the ground and allow pulling said carry-on by means of rolling said third and fourth wheel on the ground,
   a fifth wheel of said plurality (preferably not connected to any actuator and therefore idler) being connected to said base of the container, said fifth wheel being also rotatable about a further axis arranged orthogonal to the transverse axis thereof,
   when said first platform is in said second position, said fifth wheel is lying outside said quadrilateral;
- detection means connected to said first control means and suitable for
   detecting a movement of the center of gravity of the user of said carry-on when said container is resting on the ground at said wheels, said first platform is in said second position and said user is standing at least partly on said first platform,
   said first control means being suitable for controlling an actuation of said first and second actuator means independently of each other according to the movements of the center of gravity of said user detected by said detection means,
   an actuation of said first and/or second actuator means when said container is resting on the ground at said wheels causes a movement of said carry-on by means of a rolling on the ground of said wheels.

Advantageously, the carry-on according to the present invention is drivable by a person remaining standing on the platform (after the latter is positioned in the second position) and with slight movements of the center of gravity thereof (for example, by slightly leaning). Preferably, the carry-on moves forwards or backwards when the person driving it leans forwards or backwards, respectively, and turns to the right or to the left when said person leans to the right or to the left, respectively. Incidentally, the change of the direction of travel of the carry-on is obtained by causing only one of the two driving wheels to rotate or by causing the two driving wheels to rotate at different speeds from each other.

In light of what is said, with respect to the known carry-on disclosed above, the carry-on according to the present invention advantageously does not have handlebars and mechanical steering structures.

A further advantage of the carry-on which is the object of the invention consists in the fact that, when the latter is pulled rather than used as a motor transport means, the platform can be opposed to the base of the container so as to only be minimally in the way.

Other innovative features of the present invention are shown in the following description and are referred to in the dependent claims.

According to one aspect of the invention, said fifth wheel is arranged at a first edge of said base, opposite to said side wall,
when moving from said first position into said second position, said first platform moves away from said first edge,
when said first platform is in said second position, said third and fourth wheel and said fifth wheel are lying on opposite sides with respect to said side wall.

Advantageously, according to this aspect of the invention, the stability of the carry-on is greater when it is resting on the ground (at the aforesaid wheels) with the platform in the second position.

According to another aspect of the invention, when said first platform is in said first position, said third and fourth wheel are arranged at a second edge of said base, opposite to said first edge and adjacent to said side wall,
when said first platform is in said second position, said first and second wheel are interposed between said third and fourth wheel and said fifth wheel.

According to this aspect of the invention, the driving wheels are interposed between the two idler wheels of the platform and the idler wheel of the container. This configuration advantageously increases the drivability of the carry-on.

According to another aspect of the invention, when said first platform is in said second position, said first, second and fifth wheel are at the vertexes of a first isosceles triangle of which said first and second wheel are at the ends of the base,
said third, fourth and fifth wheel being at the vertexes of a second isosceles triangle (regardless of the position of said first platform) of which said third and fourth wheel are at the ends of the base,
the respective bases of said isosceles triangles being mutually parallel,
the respective heights of said isosceles triangles lying on a plane arranged orthogonal to said first platform.

According to this aspect of the invention, the drivability and the stability of the carry-on are even greater when it is resting on the ground at the aforesaid wheels and the platform is in the second position.

According to this aspect of the invention, said handle is substantially parallel to said second edge and is positioned in such a way that a projection thereof on said base is closer to said second edge than to said first edge.

Advantageously according to this aspect of the invention, the carry-on can be easily pulled when it is resting on the ground at the idler wheels of the platform and the latter is in the first position.

According to another aspect of the invention, said carry-on comprises:
- third actuator means suitable for moving said first platform between said first and second position;
- second control means connected to said third actuator means to control an actuation thereof;
- a control panel connected to said second control means and by means of which a user of said carry-on may impart instructions to said second control means,
   said second control means being suitable for controlling an actuation of said third actuator means according to the instructions imparted by said user by means of said control panel,
   said control panel being arranged at said handle.

According to this aspect of the invention, a person may control an extraction or retraction of the platform by means of a control panel arranged at the handle of the carry-on, i.e. advantageously arranged at the carry-on portion that a user thereof naturally tends to grasp when there is a need to perform a movement with the carry-on.

According to another aspect of the invention, said carry-on comprises a second platform movable between a first position at which it is at least partly opposed to said first platform, and a second position at which it at least partly protrudes from said first platform away from an edge of said base opposite to said side wall (i.e. away from said first edge).

The second platform acts as extension of the first platform. According to this aspect of the invention, the surface on which a user of the carry-on may rest his/her feet when the carry-on is used as motorized means of transport is therefore advantageously wider.

### Brief description of the drawings

Further objects and advantages of the present invention will become apparent from the detailed description provided below of an example embodiment thereof and from the accompanying drawings merely given by way of a non-limiting example, in which:
- **figure 1** shows a perspective front view of a carry-on according to the present invention;
- **figure 2** shows an exploded view of the carry-on in figure 1;
- **figure 3A** shows a perspective rear view of the carry-on in figure 1;
- **figure 3B** shows a straight and partial diagrammatic cross section of the carry-on in figure 3A;
- **figure 4A** shows the carry-on in figure 3A with one of the two platforms (indicated above with the term "second platform") completely extracted;
- **figure 4B** shows a straight and partial diagrammatic cross section of the carry-on in figure 4A;
- **figure 5A** shows the carry-on in figure 3A with both platforms completely extracted;
- **figure 5B** shows a straight and partial diagrammatic cross section of the carry-on in figure 5A.

### Detailed description of some preferred embodiments of the invention

In the continuation of the present description, a figure may also be shown with reference to elements not expressly indicated in that figure but in other figures. The scale and proportions of the different elements depicted do not necessarily correspond to the actual ones.

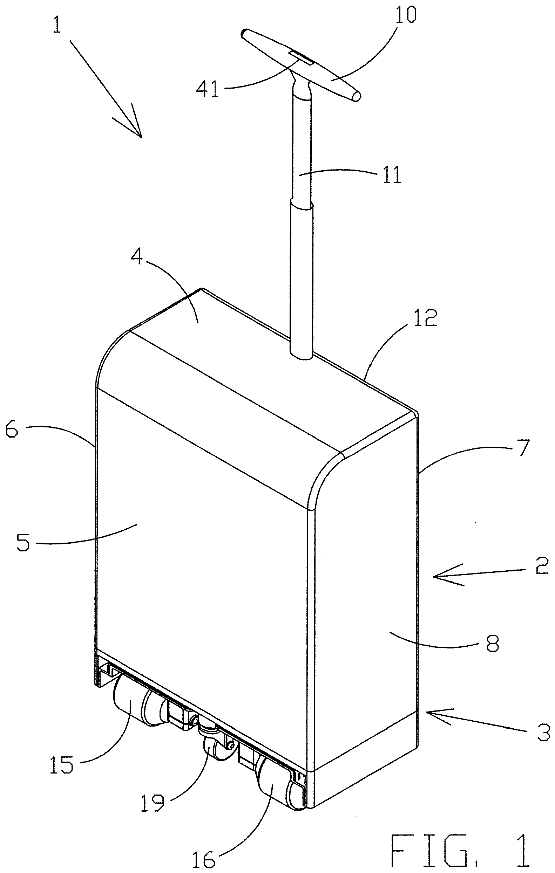

**Figures 1****,** **2****,** **3A** **and** **3B** show a carry-on 1, the object of the invention, comprising a container 2 preferably having almost parallelepiped shape with rectangular base. Container 2 includes a lower base 3, an upper base 4 opposite to base 3, and four side walls 5, 6, 7 and 8 interposed between said bases 3 and 4, preferably orthogonal thereto. Container 2 preferably is rounded at the joining between base 4 and wall 5.

Carry-on 1 further comprises a handle 10 which is extendable from container 2 from base 4. Namely, handle 10 preferably is connected to container 2 by means of a telescopic rod 11 preferably arranged orthogonal to base 4. Rod 11 is raised from base 4 preferably in the middle close to edge 12 thereof, common to wall 7. Handle 10 preferably is arranged orthogonal to rod 11 (i.e. parallel to base 4) and more preferably, parallel to edge 12. Rod 11 is completely extended in the configuration shown in figures 1, 2 and 3A.

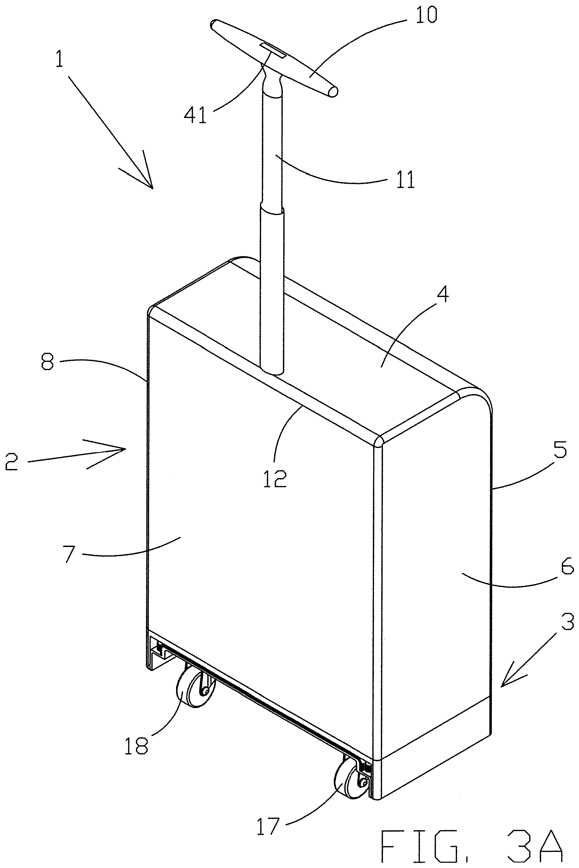

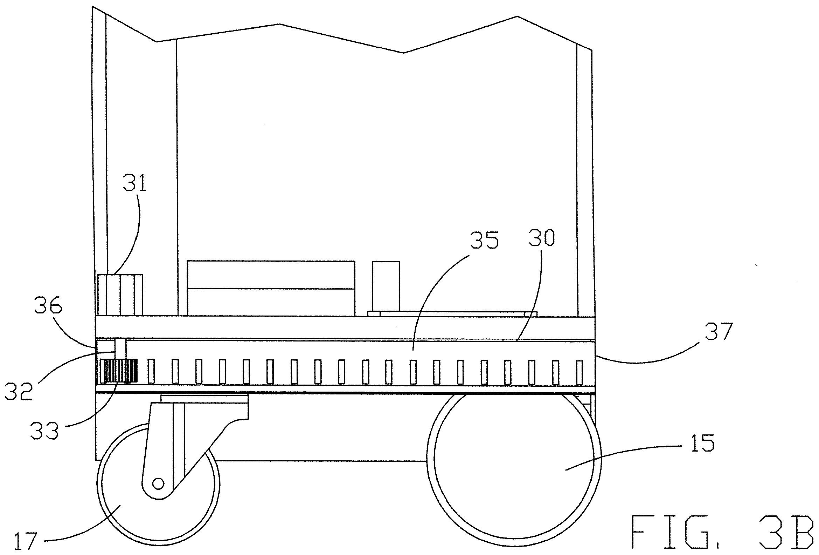

Carry-on 1 also comprises a plurality of wheels 15, 16, 17, 18 and 19 arranged close to base 3 and at which container 2 can rest on the ground. The wheels 15, 16, 17, 18 and 19 have been indicated above with the terms "first wheel", "second wheel", "third wheel", "fourth wheel" and "fifth wheel", respectively. Wheel 19 is connected to container 2 at base 3 while the wheels 15, 16, 17 and 18 are connected to container 2 by means of a platform 20 arranged below base 3 (with reference to the orientation of the carry-on 1 shown in figures 1, 3A and 3B). As better illustrated later in the present description, platform 20 is movable between a first position at which it is at least partly opposed to base 3, and a second position at which it at least partly protrudes from wall 7 (adjacent to base 3 like the remaining side walls 5, 6 and 8). Platform 20, indicated above with the term "first platform", preferably is rectangular and more preferably, has almost the same extension as base 3. Even more preferably, when platform 20 is in the aforesaid first position (as shown in figures 1, 3A and 3B), it substantially matches with base 3, i.e. it is almost completely opposed to the latter (so that there are no portions of platform 20 protruding from any of the walls 5, 6, 7 and 8).

The wheels 15, 16, 17, 18 and 19 are connected to platform 20 and to base 3, respectively, so as to rotate about a transverse axis thereof preferably arranged parallel to the aforesaid platform 20 and base 3. In addition to being rotatable about a transverse axis thereof, the wheels 17, 18 and 19 are also rotatable about a respective axis arranged orthogonal to the aforesaid transverse rotation axis (i.e. preferably arranged orthogonal to platform 20 and to base 3).

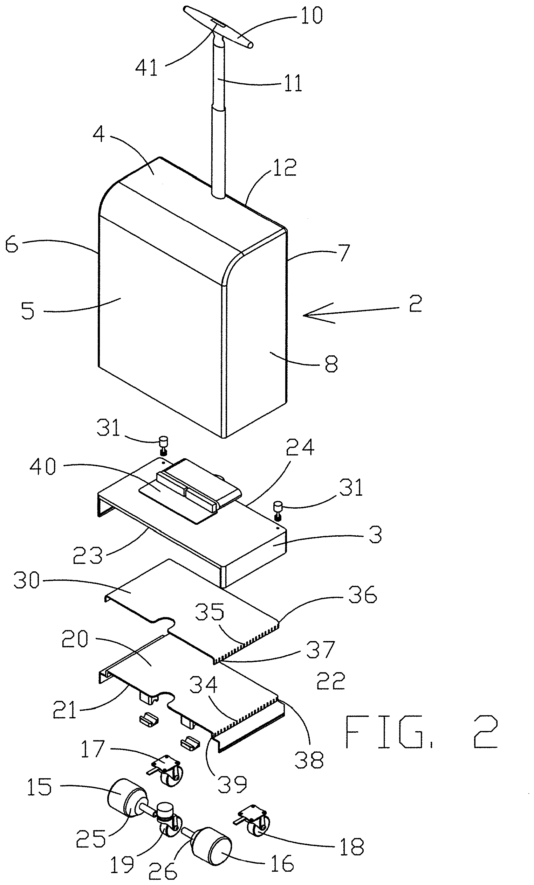

As is noted in figure 2, the wheels 15, 16, 17 and 18 are connected to platform 20 at the vertexes of a quadrilateral, and preferably at the four vertexes of platform 20, so as to delimit a rectangle. Namely, the wheels 15 and 16 preferably are arranged at an edge 21 of platform 20 and the wheels 17 and 18 preferably are arranged at an edge 22 of platform 20, opposite to the aforesaid edge 21. When platform 20 is in the aforesaid first position, edge 21 preferably is opposed to edge 23 of base 3 common to wall 5, and edge 22 preferably is opposed to edge 24 of base 3 opposite to edge 23 and therefore common to wall 7. In light of what is said, when platform 20 is in the first position, the wheels 15 and 16 preferably lie at edge 23 (indicated above with the term "first edge") and the wheels 17 and 18 preferably lie at edge 24 (indicated above with the term "second edge").

Wheel 19 is connected to base 3 preferably in the middle at edge 23. Due to this, when platform 20 is in the first position, wheel 19 is preferably interposed between the wheels 15 and 16. Additionally, regardless of the position of platform 20 (as more apparent from the description below), the wheels 17, 18 and 19 are preferably arranged at the vertexes of an isosceles triangle, of which wheels 17 and 18 are at the end of the base.

The wheels 15 and 16 preferably are equal to each other and are connected to platform 20 preferably in such a way that the respective transverse rotation axes are parallel to edge 21, and more preferably they coincide. The wheels 17, 18 and 19, which are preferably equal to one another, are idler both with respect to the transverse rotation axis and with respect to the rotation axis orthogonal to the latter. This results in the wheels 15, 16, 17, 18 and 19 capable of rolling on the ground when container 2 is resting on the ground at said wheels.

The wheels 15 and 16 are connected to a pair of actuators 25 and 26, respectively, which are suitable for causing the wheels 15 and 16 to rotate about the transverse axis thereof. When container 2 is resting on the ground on the wheels 15, 16, 17, 18 and 19, an actuation of actuator 25 and/or 26 therefore causes a movement of the carry-on 1 by means of a rolling on the ground of all the wheels 15, 16, 17, 18 and 19. In light of what is said, the wheels 15 and 16 can be classified as "driving wheels". The actuators 25 and 26 have been indicated above with the terms "first actuator means" and "second actuator means", respectively.

When container 2 is resting on the ground on the wheels 15, 16, 17, 18 and 19 and platform 20 is in the first position, container 2 can be tilted by means of handle 10 about the wheels 17 and 18 so as to raise the wheels 15, 16 and 19 off the ground and allow a pulling of the carry-on 1 (by hand and by means of handle 10) by means of rolling only wheels 17 and 18 on the ground. Incidentally, given that handle 10 preferably substantially is parallel to edge 12, it preferably substantially is parallel also to edge 24. Moreover, by raising rod 11 from base 4 preferably close to edge 12, a projection of handle 10 on base 3 preferably is closer to edge 24 than to edge 23.

The carry-on 1 preferably, but not necessarily, comprises a second platform 30, also movable, as better disclosed later in the present description, between a first position at which it is at least partly opposed to platform 20 and a second position at which it at least partly protrudes from platform 20 (away from edge 23). In the configuration shown in figures 1, 3A and 3B, platform 30 is in the first position and preferably is interposed between base 3 and platform 20. Like platform 20, platform 30 preferably is rectangular and more preferably, has almost the same extension as base 3. Even more preferably, when platform 30 is in the aforesaid first position, it substantially matches both with base 3 and with platform 20, i.e. it is almost completely opposed to the latter (so that there are no portions of platform 30 protruding from any of the walls 5, 6, 7 and 8). The carry-on 1 preferably comprises a pair of motors 31, for example of the stepper type, by means of which the platforms 20 and 30 can be moved between the aforesaid first and second position. The motors 31, which preferably are equal to each other, preferably are connected to base 3 at the ends of edge 24, respectively, with the respective shafts 32 preferably arranged orthogonal to base 3 and protruding from the latter towards the platforms 20 and 30. A toothed wheel 33 engaging a rack 34 or 35 (or a linear worm gear equivalent thereto) integral to platform 20 or 30, respectively, preferably is keyed onto each of the shafts 32. Namely, platform 20 preferably comprises a pair of racks 34 arranged at the edges of platform 20 orthogonal to the edges 21 and 22, respectively. The racks 34 are therefore opposite to each other, orthogonal to the edges 21 and 22, and can be engaged by the toothed wheels 33. Similarly, platform 30 preferably comprises a pair of racks 35 arranged at the edges of platform 30 orthogonal to the edges 23 and 24, respectively. The racks 35 are therefore opposite to each other, orthogonal to the edges 23 and 24, and can be engaged by the toothed wheels 33. When the platforms 20 and 30 are in the first position, the racks 35 preferably are overlapping the racks 34, respectively, and are engaged by the toothed wheels 33 at the two ends 36, respectively, of the racks 35 arranged at edge 24.

The motors 31, with the shafts 32 and the toothed wheels 33, have been indicated above with the term "third actuator means".

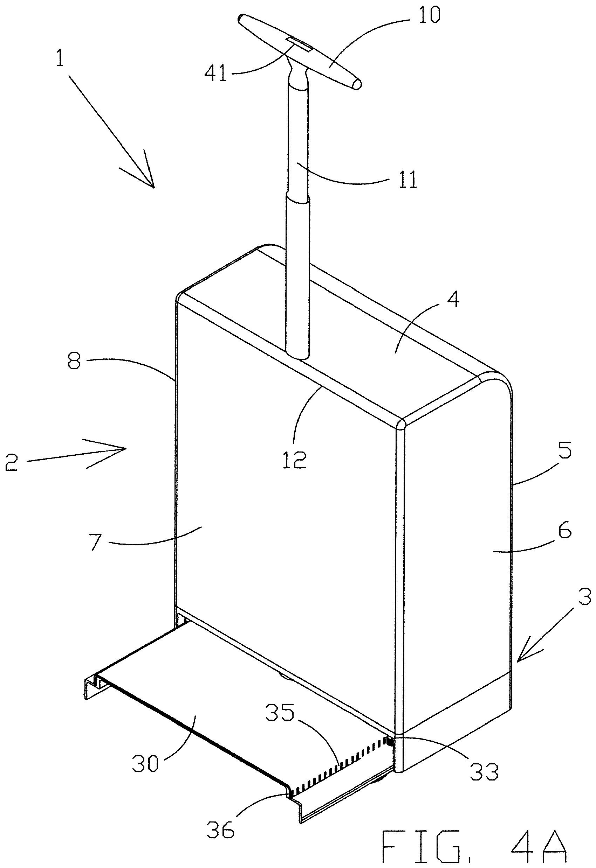

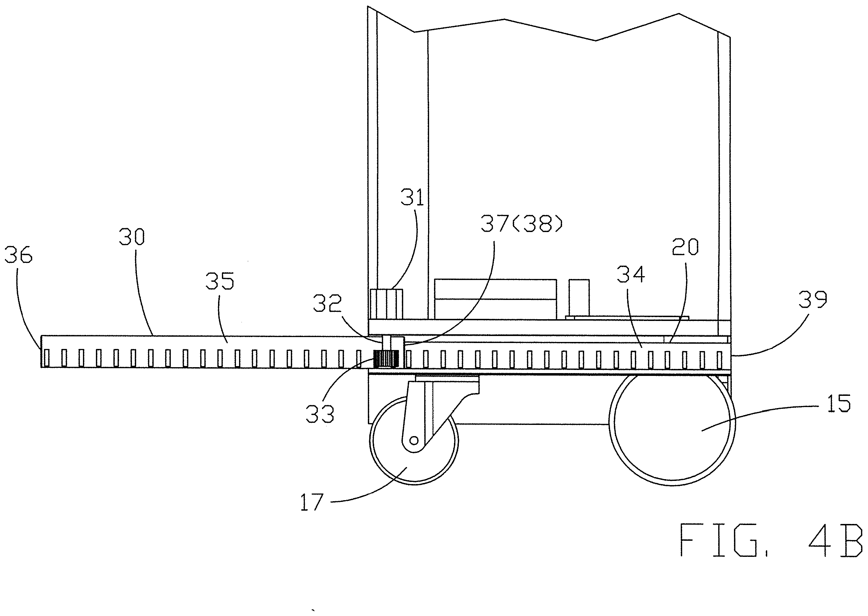

From the configuration shown in figures 1, 3A and 3B (in which both the platforms 20 and 30 are in the first position), a rotation of the toothed wheels 33 (due to an actuation of the motors 31) in opposite directions (with reference to the relative position between the toothed wheels 33 and the racks 34 and 35 shown in the drawings) causes a rolling of the toothed wheels 33 on the racks 35 and accordingly, a translation of platform 30 moving away from edge 23, preferably orthogonal to the latter and to wall 7 (and accordingly preferably orthogonal to the transverse rotation axis of the wheels 15 and 16). When the toothed wheels 33 reach the two ends 37, respectively, of the racks 35 opposite to the ends 36, platform 30 is completely extracted, i.e. the projection of platform 30 from wall 7 and from platform 20 is maximum. In this configuration (shown in **figures 4A** and **4B****),** platform 20 is still in the first position, while platform 30 is in the second position.

A locking system (not shown in the drawings) integrally connects platform 30 to platform 20 upon a further rotation of the toothed wheels 33 in the same above directions. The toothed wheels 33 roll past the ends 37 of the racks 35 and engage the racks 34 at the two ends 38 thereof, respectively, arranged at edge 22. To this end, the carry-on 1 comprises, for each motor 31, a mechanism (not shown in the drawings) suitable for causing the toothed wheels 33 to roll from the racks 35 onto the racks 34 when ends 37 are reached. Said mechanism could consist of a linear actuator or an elastic means, such as for example a spring tending to move shaft 32 close to the platforms 20 and 30 (i.e. tending to press the toothed wheel 33 against the rack 34 or 35).

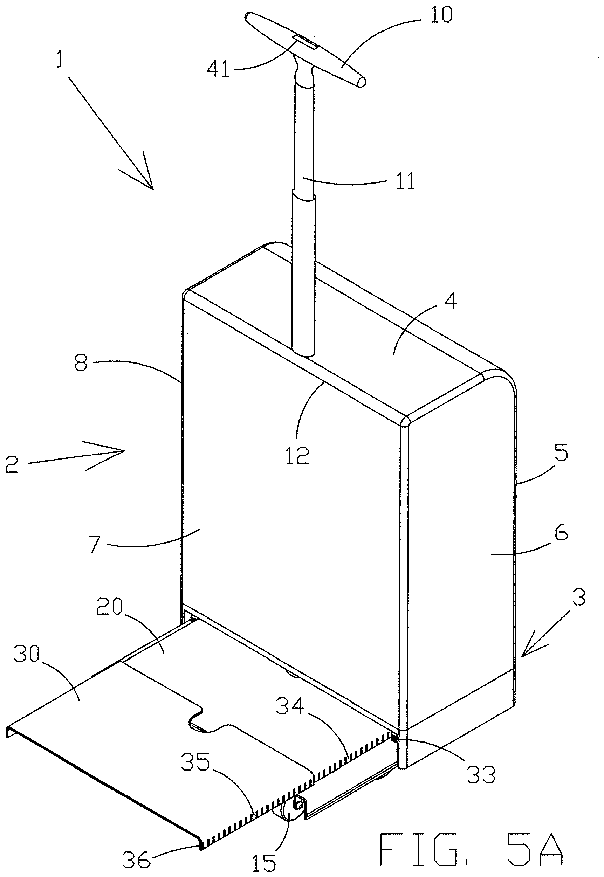

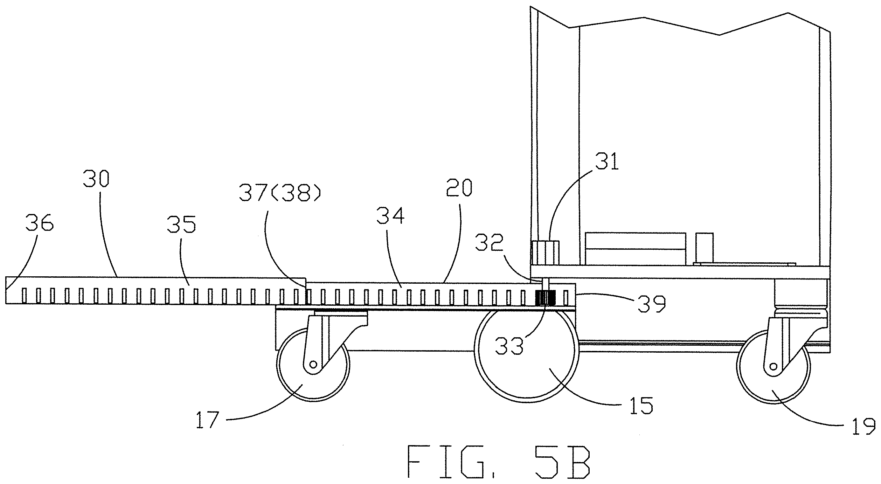

The rotation of the toothed wheels 33 causes a rolling of the latter on the racks 34 and accordingly, a translation of platform 20 moving away from edge 23, preferably orthogonal to the latter and to wall 7 (and accordingly preferably orthogonal to the transverse rotation axis of the wheels 15 and 16). Given that the platforms 20 and 30 are made integral by the aforesaid locking system, the translation of platform 20 causes a further translation of platform 30 away from wall 7. When the toothed wheels 33 reach the two ends 39, respectively, of the racks 34 opposite to the ends 38 (arranged i.e. at edge 21), platform 20 is completely extracted, i.e. the projection of platform 20 from wall 7 is maximum. In this configuration (shown in **figures 5A** and **5B**), both the platforms 20 and 30 are in the second position. In light of what is said, the platforms 20 and 30 are connected to each other and can translate with respect to each other so as to appear as a single telescopic platform.

Incidentally, from the configuration shown in figures 5A and 5B, a rotation of the toothed wheels 33 in opposite directions respectively to the preceding ones (again due to an actuation of the motors 31) causes, in sequence, a locking between the platforms 20 and 30, a translation of platform 30 on platform 20 (i.e. in direction opposite to the preceding one) up to returning to the configuration shown in figures 4A and 4B, and a translation of both the platforms 20 and 30 under base 3 up to returning to the configuration shown in figures 1, 3A and 3B. In light of what is said, the aforesaid locking system between the platforms 20 and 30 is a "reversible" locking system. That is, the platforms 20 and 30 are integrally connectable to each other and unlockable from each other an indefinite number of times. It is the rotation of the toothed wheels 33 in one or the other direction, in conjunction with the overlapping between the ends 37 (of the racks 35) and 38 (of the racks 34) that causes the locking or unlocking, respectively, between the two platforms 20 and 30.

As mentioned above with reference to figure 2, the wheels 15 and 16 preferably are equal to each other and are connected to platform 20 preferably in such a way that the respective transverse rotation axes are parallel to edge 21, and more preferably they coincide. In light of this, as mentioned above, platform 20 can be translated by means of the toothed wheels 33 orthogonal to the transverse rotation axis of the wheels 15 and 16.

Incidentally, for the purposes of the movement of the platforms 20 and 30, the carry-on 1 could comprise a single motor 31 connected to a single toothed wheel 33 or a single motor 31 connected to both toothed wheels 33 (with a possible reversing system of the rotation direction in the transmission of the motion to one or the other toothed wheel 33).

As specified above, the carry-on 1 might not comprise platform 30 (acting substantially as extension of platform 20). In this case, the carry-on 1 would not comprise any locking system and the motors 31 would be suitable for allowing the movement of platform 20 alone. In other words, a rotation of the toothed wheels 33 upon an actuation of the motors 31 in this case would cause an immediate translation of platform 20 in one direction or in the opposite direction. The motors 31 are connected to a control unit 40 (shown in figure 2) suitable for controlling an actuation thereof (and accordingly a translation of the platforms 20 and 30). Unit 40, indicated above with the term "second control means", is connected to a control panel 41 preferably arranged at handle 10 and by means of which a user of the carry-on 1 may impart instructions to unit 40. Namely, unit 40 is suitable for controlling an actuation of the motors 31 according to instructions imparted by the aforesaid user by means of panel 41. In other words, a user of the carry-on 1 may control an extraction of the platforms 20 and 30 or a retraction thereof by means of panel 41.

As described above, the wheels 15, 16, 17 and 18 are connected to platform 20 at the vertexes of a quadrilateral, and preferably at the four vertexes of platform 20, so as to delimit a rectangle. That being said, with reference to figure 5B, when platform 20 is in the second position it may also be noted that wheel 19 lies outside the aforesaid quadrilateral. In particular, when platform 20 is in the second position, the wheels 17 in 18 and wheel 19 preferably lie on opposite sides with respect to wall 7 and to the wheels 15 and 16 (i.e. the latter are interposed between the wheels 17 and 18 and wheel 19). More preferably, when platform 20 is in the second position, the wheels 15, 16 and 19 are arranged at the vertexes of an isosceles triangle, of which wheels 15 and 16 are at the end of the base. The base of said isosceles triangle preferably is parallel to the base of the isosceles triangle at which vertexes the wheels 17, 18 and 19 preferably are arranged. In addition to being mutually parallel, the heights of said isosceles triangles preferably lie on a plane arranged orthogonal to platform 20.

The actuators 25 and 26 are connected to a control unit (indicated above with the term "first control means") suitable for controlling an actuation thereof and accordingly a movement of the carry-on 1 due to a rolling of the wheels 15 and 16. In particular, an actuation of actuator 25 can be independently controlled by an actuation of actuator 26 by said control unit. The latter is connected to sensors (indicated above with the term "detection means") suitable for detecting a movement of the center of gravity of a user of the carry-on 1 when container 2 is resting on the ground on the wheels 15, 16, 17, 18 and 19, platform 20 is in the second position and said user is at least partly standing on platform 20. Namely, said control unit is suitable for controlling an actuation of the actuators 25 and 26 according to the movements of the center of gravity of said user detected by the aforesaid sensors. In other words, when container 2 is resting on the ground on wheels 15, 16, 17, 18 and 19 and platform 20 is in the second position, the carry-on 1 can be driven by a person standing on platform 20 by means of slight movements of his/her center of gravity. Preferably, the carry-on 1 moves forwards or backwards when the person driving it leans forwards or backwards, respectively, and turns to the right or to the left when said person leans to the right or to the left, respectively. Incidentally, the change of the direction of travel of the carry-on 1 is obtained by causing only one of the wheels 15 and 16 to rotate or by causing the wheels 15 and 16 to rotate at different speeds from each other. A platform provided with two driving wheels and two idler wheels, a control unit and a sensor like the ones described above so as to be drivable by a person standing on said platform, with slight movements of the center of gravity thereof, is described by way of example in Patent Application WO 2017 094069 A1. Therefore, further details will not be provided.

Incidentally, rather than comprising an actuator 25 or 26 for each wheel 15 or 16, the carry-on 1 could equivalently comprise a single actuator capable of actuating (i.e. putting into rotation) the wheels 15 and 16 independently of each other.

On the basis of the description provided for a preferred example embodiment, it is obvious that some changes may be made by those skilled in the art without departing from the scope of the invention as defined by the following claims.

## Claims

1. A carry-on (1), comprising:
• a container (2) including a base (3) and at least one side wall (7) adjacent to said base (3);
• at least one handle (10) connected to said container (2) and extendable from the latter from a portion (4) thereof opposite to said base (3);
• a plurality of wheels (15, 16, 17, 18, 19) at which said container (2) can rest on the ground,
each wheel (15, 16, 17, 18, 19) of said plurality being rotatable about a transverse axis thereof so as to roll on the ground when said container (2) is resting on the ground at said wheels (15, 16, 17, 18, 19);
• first actuator means (25) connected to a first wheel (15) of said plurality, to put the same into rotation about the transverse axis thereof;
• first control means connected to said first actuator means (25) to control an actuation thereof,
said carry-on (1) further comprising:
• second actuator means (26) connected to a second wheel (16) of said plurality, to put the same into rotation about the transverse axis thereof;
said first control means also being connected to said second actuator means (26) to control an actuation thereof;
• a first platform (20) movable between a first position at which it is at least partly opposed to said base (3), and a second position at which it at least partly protrudes from said side wall (7),
said first and second wheel (15, 16) being connected to said first platform (20),
a third and a fourth wheel (17, 18) of said plurality being connected to said first platform (20), each of said third and fourth wheel (17, 18) being also rotatable about a further axis arranged orthogonal to the transverse axis thereof,
said first, second, third and fourth wheel (15, 16, 17, 18) being positioned at the vertexes of a quadrilateral, said third and fourth wheel (17, 18) being at the ends of the same side of said quadrilateral,
when said container (2) is resting on the ground at said wheels (15, 16, 17, 18, 19) and said first platform (20) is in said first position, said container (2) is tiltable, by means of said handle (10), about said third and fourth wheel (17, 18) so as to raise said first and second wheel (15, 16) off the ground and allow pulling said carry-on (1) by means of rolling said third and fourth wheel (17, 18) on the ground,
a fifth wheel (19) of said plurality being connected to said base (3), said fifth wheel (19) being also rotatable about a further axis arranged orthogonal to the transverse axis thereof,
when said first platform (20) is in said second position, said fifth wheel (19) is lying outside said quadrilateral;
• detection means connected to said first control means and suitable for detecting a movement of the center of gravity of the user of said carry-on (1) when said container (2) is resting on the ground at said wheels (15, 16, 17, 18, 19), said first platform (20) is in said second position and said user is standing at least partly on said first platform (20),
said first control means being suitable for controlling an actuation of said first and second actuator means (25, 26) independently of each other according to the movements of the center of gravity of said user detected by said detection means,
an actuation of said first and/or second actuator means (25, 26) when said container (2) is resting on the ground at said wheels (15, 16, 17, 18, 19) causing a movement of said carry-on (1) by means of a rolling on the ground of said wheels (15, 16, 17, 18, 19).

2. A carry-on (1) according to claim 1, **characterized in that** said fifth wheel (19) is arranged at a first edge (23) of said base (3), opposite to said side wall (7),
when moving from said first position into said second position, said first platform (20) moving away from said first edge (23),
when said first platform (20) is in said second position, said third and fourth wheel (17, 18) and said fifth wheel (19) lying on opposite sides with respect to said side wall (7).

3. A carry-on (1) according to claim 2, **characterized in that** when said first platform (20) is in said first position, said third and fourth wheel (17, 18) are arranged at a second edge (24) of said base (3), opposite to said first edge (23) and adjacent to said side wall (7),
when said first platform (20) is in said second position, said first and second wheel (15, 16) are interposed between said third and fourth wheel (17, 18) and said fifth wheel (19).

4. A carry-on (1) according to claim 3, **characterized in that** when said first platform (20) is in said second position, said first, second and fifth wheel (15, 16, 19) are at the vertexes of a first isosceles triangle, of which said first and second wheel (15, 16) are at the ends of the base,
said third, fourth and fifth wheel (17, 18, 19) being at the vertexes of a second isosceles triangle, of which said third and fourth wheel (17, 18) are at the ends of the base,
the respective bases of said isosceles triangles being mutually parallel,
the respective heights of said isosceles triangles lying on a plane arranged orthogonal to said first platform (20).

5. A carry-on (1) according to claim 3 or 4, **characterized in that** said handle (10) is substantially parallel to said second edge (24) and is positioned in such a way that a projection thereof on said base (3) is closer to said second edge (24) than to said first edge (23).

6. A carry-on (1) according to one of the preceding claims, **characterized in that** it comprises:
• third actuator means (31, 32, 33) suitable for moving said first platform (20) between said first and second position;
• second control means (40) connected to said third actuator means (31, 32, 33) to control an actuation thereof;
• a control panel (41) connected to said second control means (40) and by means of which a user of said carry-on (1) may impart instructions to said second control means (40),
said second control means (40) being suitable for controlling an actuation of said third actuator means (31, 32, 33) according to the instructions imparted by said user by means of said control panel (41),
said control panel (41) being arranged at said handle (10).

7. A carry-on (1) according to one of the preceding claims, **characterized in that** it comprises a second platform (30) movable between a first position at which it is at least partly opposed to said first platform (20), and a second position at which it at least partly protrudes from said first platform (20) away from an edge (23) of said base (3) opposite to said side wall (7).

8. A carry-on (1) according to claim 7 when dependent on claim 6, **characterized in that** said third actuator means (31, 32, 33) are suitable for also moving said second platform (30) between said first and second position.

## Patentansprüche

1. Handgepäck (1), umfassend:
• einen Behälter (2), der eine Basis (3) und mindestens eine Seitenwand (7) angrenzend an die Basis (3) umfasst;
• mindestens einen Griff (10), der mit dem Behälter (2) verbunden ist und von letzterem aus einem Abschnitt (4) gegenüber der Basis (3) ausfahrbar ist;
• eine Vielzahl von Rädern (15, 16, 17, 18, 19), auf denen der Behälter (2) auf dem Boden ruhen kann,
wobei jedes Rad (15, 16, 17, 18, 19) der Vielzahl um eine Querachse davon drehbar ist, um auf dem Boden zu rollen, wenn der Behälter (2) auf den Rädern (15, 16, 17, 18, 19) auf dem Boden ruht;
• erste Betätigungsmittel (25), die mit einem ersten Rad (15) der Vielzahl verbunden sind, um dasselbe in Rotation um seine Querachse zu versetzen;
• erste Steuermittel, die mit den ersten Betätigungsmitteln (25) verbunden sind, um eine Betätigung davon zu steuern,
das Handgepäck (1) ferner umfassend:
• zweite Betätigungsmittel (26), die mit einem zweiten Rad (16) der Vielzahl verbunden sind, um dasselbe in Rotation um seine Querachse zu versetzen;
wobei die erste Steuereinrichtung auch mit der zweiten Betätigungseinrichtung (26) verbunden ist, um deren Betätigung zu steuern;
• eine erste Plattform (20), die zwischen einer ersten Position, in der sie zumindest teilweise der Basis (3) gegenüberliegt, und einer zweiten Position, in der sie zumindest teilweise von der Seitenwand (7) vorsteht, bewegbar ist,
wobei das erste und das zweite Rad (15, 16) mit der ersten Plattform (20) verbunden sind, wobei ein drittes und viertes Rad (17, 18) der Vielzahl mit der ersten Plattform (20) verbunden sind, wobei jedes dritte und vierte Rad (17, 18) auch um eine weitere Achse drehbar ist, die orthogonal zu deren Querachse angeordnet ist, wobei das erste, zweite, dritte und vierte Rad (15, 16, 17, 18) an den Scheitelpunkten eines Vierecks positioniert sind, wobei das dritte und vierte Rad (17, 18) an den Enden derselben Seite des Vierecks vorhanden sind, wenn der Behälter (2) auf den Rädern (15, 16, 17, 18, 19) auf dem Boden ruht und die erste Plattform (20) sich in der ersten Position befindet, wobei der Behälter (2) mittels des Handgriffs (10) kippbar ist, um das dritte und vierte Rad (17, 18), um das erste und zweite Rad (15, 16) vom Boden anzuheben und das Ziehen des Handgepäcks (1) durch Rollen des dritten und vierten Rad (17, 18) auf dem Boden zu ermöglichen,
wobei ein fünftes Rad (19) der Vielzahl mit der Basis (3) verbunden ist, wobei das fünfte Rad (19) auch um eine weitere Achse drehbar ist, die orthogonal zu ihrer Querachse angeordnet ist,
wobei wenn sich die erste Plattform (20) in der zweiten Position befindet, liegt das fünfte Rad (19) außerhalb des Vierecks;
• Erfassungsmittel, die mit den ersten Steuermitteln verbunden und geeignet sind, eine Bewegung des Schwerpunkts des Benutzers des Handgepäcks (1) zu erfassen, wenn der Behälter (2) auf den Rädern (15, 16, 17, 18, 19) auf dem Boden ruht, wobei sich die erste Plattform (20) in der zweiten Position befindet und der Benutzer zumindest teilweise auf der ersten Plattform (20) steht, wobei die erste Steuereinrichtung dazu geeignet ist, eine Betätigung der ersten und der zweiten Betätigungseinrichtung (25, 26) unabhängig voneinander gemäß den Bewegungen des Schwerpunkts des Benutzers zu steuern, die von der Erfassungseinrichtung erfasst werden, wobei eine Betätigung der ersten und/oder zweiten Betätigungseinrichtung (25, 26), wenn der Behälter (2) an den Rädern (15, 16, 17, 18, 19) auf dem Boden ruht, eine Bewegung des Handgepäcks (1) durch Abrollen der Räder (15, 16, 17, 18, 19) auf dem Boden, verursacht.

2. Handgepäck (1) nach Anspruch 1, **dadurch gekennzeichnet, dass** das fünfte Rad (19) an einer ersten Kante (23) der Basis (3) gegenüber der Seitenwand (7) angeordnet ist.
Wobei beim Bewegen von der ersten Position in die zweite Position bewegt sich die erste Plattform (20) von der ersten Kante (23) weg, wenn sich die erste Plattform (20) in der zweiten Position befindet, so liegen das dritte und vierte Rad (17, 18) und das fünfte Rad (19) auf gegenüberliegenden Seiten bezüglich der Seitenwand (7).

3. Handgepäck (1) nach Anspruch 2, **dadurch gekennzeichnet, dass**, wenn sich die erste Plattform (20) in der ersten Position befindet, sind das dritte und das vierte Rad (17, 18) an einer zweiten Kante (24) der Basis (3) angeordnet, gegenüber der ersten Kante (23) und angrenzend an die Seitenwand (7),
wenn sich die erste Plattform (20) in der zweiten Position befindet, sind das erste und zweite Rad (15, 16) zwischen dem dritten und vierten Rad (17, 18) und dem fünften Rad (19) angeordnet.

4. Handgepäck (1) nach Anspruch 3, **dadurch gekennzeichnet, dass**, wenn sich die erste Plattform (20) in der zweiten Position befindet, sind das erste, zweite und fünfte Rad (15, 16, 19) an den Scheitelpunkten eines ersten gleichschenkligen Dreiecks, dessen erstes und zweites Rad (15, 16) sich an den Enden der Basis befinden,
wobei sich das dritte, vierte und fünfte Rad (17, 18, 19) an den Scheitelpunkten eines zweiten gleichschenkligen Dreiecks befinden, von dem sich das dritte und vierte Rad (17, 18) an den Enden der Basis befinden,
wobei die jeweiligen Basen der gleichschenkligen Dreiecke zueinander parallel sind, wobei die jeweiligen Höhen der gleichschenkligen Dreiecke auf einer Ebene liegen, die orthogonal zu der ersten Plattform (20) angeordnet ist.

5. Handgepäck (1) nach Anspruch 3 oder 4, **dadurch gekennzeichnet, dass** der Handgriff (10) im Wesentlichen parallel zu der zweiten Kante (24) ist und so positioniert ist, dass ein Vorsprung davon auf der Basis (3) näher an der zweiten Kante (24) als an der ersten Kante (23) angeordnet ist.

6. Handgepäck (1) nach einem der vorhergehenden Ansprüche, **dadurch gekennzeichnet, dass** es umfasst:
• dritte Betätigungsmittel (31, 32, 33), die zum Bewegen der ersten Plattform (20) zwischen der ersten und der zweiten Position geeignet sind;
• zweite Steuermittel (40), die mit den dritten Betätigungsmitteln (31, 32, 33) verbunden sind, um deren Betätigung zu steuern;
• ein Bedienfeld (41), das mit dem zweiten Steuermittel (40) verbunden ist und mittels dessen ein Benutzer des Handgepäcks (1) dem zweiten Steuermittel (40) Anweisungen erteilen kann,
wobei die zweite Steuereinrichtung (40) geeignet ist, eine Betätigung der dritten Betätigungseinrichtung (31, 32, 33) gemäß den Anweisungen zu steuern, die von dem Benutzer mittels des Bedienfeldes (41) erteilt werden,
wobei das Bedienfeld (41) an dem Handgriff (10) angeordnet ist.

7. Handgepäck (1) nach einem der vorhergehenden Ansprüche, **dadurch gekennzeichnet, dass** es eine zweite Plattform (30) umfasst, die sich zwischen einer ersten Position, in der sie zumindest teilweise der ersten Plattform (20) gegenüberliegt, und einer zweiten Position bewegt, an der sie zumindest teilweise von der ersten Plattform (20) weg von einer Kante (23) der Basis (3) gegenüber der Seitenwand (7) vorsteht.

8. Handgepäck (1) nach Anspruch 7 in Abhängigkeit von Anspruch 6, **dadurch gekennzeichnet, dass** die dritten Betätigungsmittel (31, 32, 33) geeignet sind, auch die zweite Plattform (30) zwischen der ersten und der zweiten Position zu bewegen.

## Revendications

1. Bagage à main (1), comprenant :
• un conteneur (2) comprenant une base (3) et au moins une paroi latérale (7) adjacente à ladite base (3) ;
• au moins une poignée (10) reliée audit conteneur (2) et extensible depuis ce dernier à partir d'une partie (4) de celui-ci opposée à ladite base (3) ;
• une pluralité de roues (15, 16, 17, 18, 19) sur lesquelles ledit conteneur (2) peut reposer sur le sol, chaque roue (15, 16, 17, 18, 19) de ladite pluralité pouvant tourner autour d'un axe transversal de celle-ci de manière à rouler sur le sol lorsque ledit conteneur (2) repose sur le sol au niveau desdites roues (15, 16, 17, 18, 19);
• des premiers moyens d'actionnement (25) reliés à une première roue (15) de ladite pluralité, pour mettre celle-ci en rotation autour de son axe transversal ;
• des premiers moyens de commande reliés auxdits premiers moyens d'actionnement (25) pour commander un actionnement de ceux-ci, comprenant en autre :
• des deuxièmes moyens d'actionnement (26) reliés à une deuxième roue (16) de ladite pluralité, pour mettre celle-ci en rotation autour de son axe transversal ; lesdits premiers moyens de commande étant également connectés auxdits deuxièmes moyens d'actionnement (26) pour commander un actionnement de ceux-ci ;
• une première plate-forme (20) mobile entre une première position dans laquelle elle est au moins partiellement opposée à ladite base (3), et une deuxième position dans laquelle elle dépasse au moins partiellement de ladite paroi latérale (7), lesdites première et deuxièmes roues (15, 16) étant reliées à ladite première plate-forme (20), une troisième et une quatrième roue (17, 18) de ladite pluralité étant reliées à ladite première plate-forme (20), chacune desdites troisième et quatrième roues (17, 18) pouvant également tourner autour d'un autre axe agencé orthogonalement à son axe transversal , lesdites première, deuxième, troisième et quatrième roues (15, 16, 17, 18) étant positionnées aux sommets d'un quadrilatère, lesdites troisième et quatrième roues (17, 18) étant aux extrémités du même côté dudit quadrilatère, lorsque ledit conteneur (2) repose sur le sol au niveau desdites roues (15, 16, 17, 18, 19) et ladite première plate-forme (20) est dans ladite première position, ledit conteneur (2) est labourable, au moyen de ladite poignée (10), autour desdites troisième et quatrième roues (17, 18) de manière à soulever lesdites première et deuxième roues (15, 16) du sol et permettre de tirer ledit bagage à main (1) en faisant rouler lesdites troisième et quatrième roues (17, 18) au sol, une cinquième roue (19) de ladite pluralité étant reliée à ladite base (3), ladite cinquième roue (19) pouvant également tourner autour d'un autre axe agencé orthogonalement à son axe transversal, lorsque ladite première plate-forme (20) est dans ladite deuxième position, ladite cinquième roue (19) se trouve à l'extérieur dudit quadrilatère ;
• des moyens de détection reliés auxdits premiers moyens de commande et aptes à détecter un déplacement du centre de gravité de l'utilisateur dudit bagage à main (1) lorsque ledit conteneur (2) repose sur le sol au niveau desdites roues (15, 16, 17, 18, 19), ladite première plate-forme (20) est dans ladite deuxième position et ledit utilisateur se tient au moins partiellement sur ladite première plate-forme (20), lesdits premiers moyens de commande étant aptes à commander un actionnement desdits premiers et deuxièmes moyens d'actionnement (25, 26) indépendamment l'un de l'autre en fonction des mouvements du centre de gravité dudit utilisateur détectés par lesdits moyens de détection, un actionnement desdits premiers et/ou deuxièmes moyens d'actionnement (25, 26) lorsque ledit conteneur (2) repose sur le sol au niveau desdites roues (15, 16, 17, 18, 19) provoquant un déplacement dudit bagage à main (1) au moyen d'un roulement sur le sol desdites roues (15, 16, 17, 18, 19).

2. Bagage à main (1) selon la revendication 1, **caractérisé en ce que** ladite cinquième roue (19) est agencée au niveau d'un premier bord (23) de ladite base (3), opposé à ladite paroi latérale (7),
lors du passage de ladite première position à ladite deuxième position, ladite première plateforme (20) s'éloignant dudit premier bord (23), lorsque ladite première plate-forme (20) est dans ladite deuxième position, lesdites troisième et quatrième roues (17, 18) et ladite cinquième roue (19) se trouvant sur des côtés opposés par rapport à ladite paroi latérale (7).

3. Bagage à main (1) selon la revendication 2, **caractérisé en ce que** lorsque ladite première plate-forme (20) est dans ladite première position, lesdites troisième et quatrième roues (17, 18) sont agencées au niveau d'un deuxième bord (24) de ladite base (3), opposée audit premier bord (23) et adjacente à ladite paroi latérale (7),
lorsque ladite première plate-forme (20) est dans ladite deuxième position, lesdites première et deuxième roues (15, 16) sont interposées entre lesdites troisième et quatrième roues (17, 18) et ladite cinquième roue (19).

4. Bagage à main (1) selon la revendication 3, **caractérisé en ce que** lorsque ladite première plate-forme (20) est dans ladite deuxième position, lesdites première, deuxième et cinquième roues (15, 16, 19) sont aux sommets d'une première triangle isocèle, dont lesdites première et deuxième roues (15, 16) sont aux extrémités de la base,
lesdites troisième, quatrième et cinquième roues (17, 18, 19) étant aux sommets d'un deuxième triangle isocèle, dont lesdites troisième et quatrième roues (17, 18) sont aux extrémités de la base,
les bases respectives desdits triangles isocèles étant mutuellement parallèles,
les hauteurs respectives desdits triangles isocèles se trouvant sur un plan agencé orthogonalement à ladite première plate-forme (20) .

5. Bagage à main (1) selon la revendication 3 ou 4, **caractérisé en ce que** ladite poignée (10) est sensiblement parallèle audit deuxième bord (24) et est positionnée de telle manière qu'une saillie de celle-ci sur ladite base (3) est plus près dudit deuxième bord (24) que dudit premier bord (23).

6. Bagage à main (1) selon l'une des revendications précédentes, **caractérisé en ce qu'**il comprend :
• des troisièmes moyens d'actionnement (31, 32, 33) aptes à déplacer ladite première plate-forme (20) entre lesdites première et deuxième positions;
• des deuxièmes moyens de commande (40) reliés auxdits troisièmes moyens d'actionnement (31, 32, 33) pour commander un actionnement de ceux-ci ;
• un panneau de commande (41) relié audit deuxième moyen de commande (40) et au moyen duquel un utilisateur dudit bagage à main (1) peut communiquer des instructions audit deuxième moyen de commande (40),
lesdits deuxièmes moyens de commande (40) étant aptes à commander un actionnement desdits troisièmes moyens d'actionnement (31, 32, 33) selon les instructions communiquées par ledit utilisateur au moyen dudit panneau de commande (41),
ledit panneau de commande (41) étant agencé au niveau de ladite poignée (10).

7. Bagage à main (1) selon l'une des revendications précédentes, **caractérisé en ce qu'**il comprend une deuxième plateforme (30) mobile entre une première position dans laquelle il est au moins partiellement opposé à ladite première plateforme (20), et une deuxième position à laquelle il dépasse au moins partiellement de ladite première plate-forme (20) à distance d'un bord (23) de ladite base (3) opposé à ladite paroi latérale (7).

8. Bagage à main (1) selon la revendication 7 lorsqu'elle dépend de la revendication 6, **caractérisé en ce que** lesdits troisièmes moyens d'actionnement (31, 32, 33) sont adaptés pour déplacer également ladite deuxième plate-forme (30) entre lesdites première et deuxième positions.
